# EUROPEAN PATENT APPLICATION

(11) **EP 4 717 542 A1**
(43) Date of publication of application: **01.04.2026**
(21) Application number: 25205284.0
(22) Date of filing: 29.09.2025
(51) Int. Cl.: B60W 30/10, B60W 30/18, B60W 60/00, B60W 50/06

(54) **MOBILE OBJECT CONTROL DEVICE, MOBILE OBJECT CONTROL METHOD, AND PROGRAM**

(30) Priority: 30.09.2024 JP 2024171325
(71) Applicant: HONDA MOTOR CO., LTD., Tokyo 105-8404 (JP)
(72) Inventor: SHIRAKATA, Kento, Wako-shi, Saitama, 351-0193 (JP)
(74) Representative: Kiwit, Benedikt

(57) **Abstract**

A mobile object control device for a mobile object capable of performing autonomous movement according to an embodiment includes an acquirer configured to acquire a current position of the mobile object, a current state of the mobile object, and a target trajectory of the mobile object, a control point setter configured to set a plurality of first control points on a predicted trajectory based on the current position and the current state and set a plurality of second control points on a target trajectory of the mobile object, a curve generator configured to generate a curve on the basis of the plurality of first control points and the plurality of second control points, and an evaluator configured to perform evaluation of the curve.

## Description

### BACKGROUND OF THE INVENTION

### Field of the Invention

The present invention relates to a mobile object control device, a mobile object control method, and a program.

### Description of Related Art

Recently, research for automatically controlling the driving of a vehicle (hereinafter referred to as "automated driving") has been conducted. In the automated driving, a target trajectory is set in accordance with a current position and a surrounding situation of a vehicle and the vehicle is controlled to travel along this target trajectory. In relation to such technology, there has been proposed a technique for controlling the traveling of a vehicle by taking into account a steering state, a wheel state, a direction state, and the like in addition to a current position of the vehicle (see, for example, Japanese Unexamined Patent Application, First Publication No. 2023-90509).

### SUMMARY OF THE INVENTION

In a situation where steering control is required for a vehicle traveling in an automated driving mode on a curved road, an intersection, and the like, there is a need to improve the tracking performance to a decided target trajectory while stabilizing the behavior of a mobile object with smoothing a trajectory along which the vehicle travels from a current position until the target trajectory. However, in the conventional technique, the control of the behavior of the mobile object in the above-described situation has not been sufficiently considered.

The present invention has been made in view of such circumstances and one object of the present invention is to provide a mobile object control device, a mobile object control method, and a program which enable the tracking performance to a target trajectory to be improved while enabling the behavior of a mobile object to be stabilized.

A mobile object control device, a mobile object control method, and a program according to the present invention adopt the following configurations.
(1): According to an aspect of the present invention, there is provided a mobile object control device for a mobile object capable of performing autonomous movement, the mobile object control device including: an acquirer configured to acquire a current position of the mobile object, a current state of the mobile object, and a target trajectory of the mobile object; a control point setter configured to set a plurality of first control points on a predicted trajectory based on the current position and the current state and set a plurality of second control points on a target trajectory of the mobile object; a curve generator configured to generate a curve on the basis of the plurality of first control points and the plurality of second control points; and an evaluator configured to perform evaluation of the curve.
(2): In the above-described aspect (1), the control point setter is configured to set a plurality of sets each having the plurality of second control points on the target trajectory, the curve generator is configured to generate a plurality of curves on the basis of the plurality of first control points and each of the plurality of sets, and the evaluator is configured to select a curve with highest evaluation from among the plurality of curves on the basis of evaluation results for the plurality of curves.
(3): In the above-described aspect (1) or (2), the evaluator performs the evaluation on the basis of at least one of an area of a portion surrounded by the target trajectory and the curve, a ratio between the area and a length of the curve, a maximum curvature of the curve, or a maximum change rate of the curve.
(4): In the above-described aspect (2) or (3), the evaluator calculates an instruction value for a curvature of movement of the mobile object by performing curvature fitting on the selected curve.
(5): In the above-described aspect (4), there is further provided a movement controller configured to move the mobile object according to the calculated instruction value.
(6): In the above-described aspect (4) or (5), the predicted trajectory has a predetermined length, and the evaluator performs the curvature fitting on a part of the selected curve, the part having a length with the predetermined length from the current position being used as a reference.
(7): In the above-described aspect (6), the predetermined length is variable according to a current speed of the mobile object.
(8): In any one of the above-described aspects (1) to (7), the curve is a B-spline curve.
(9): In any one of the above-described aspects (1) to (8), the current state of the mobile object includes at least an instruction value for a curvature of current movement of the mobile object.
(10): In the above-described aspect (9), the instruction value is a current steering angle of the mobile object.
(11): In any one of the above-described aspects (1) to (10), the number of the first control points is 3, and the number of the second control points is 3.
(12): In any one of the above-described aspects (1) to (11), an interval between the first control points in the plurality of first control points is equal to an interval between the second control points in the plurality of second control points.
(13): According to another aspect of the present invention, there is provided a mobile object control method for a mobile object capable of performing autonomous movement, the mobile object control method including: acquiring, by a computer, a current position of the mobile object, a current state of the mobile object, and a target trajectory of the mobile object; setting, by the computer, a plurality of first control points on a predicted trajectory based on the current position and the current state; setting, by the computer, a plurality of second control points on a target trajectory of the mobile object; generating, by the computer, a curve on the basis of the plurality of first control points and the plurality of second control points; and performing, by the computer, evaluation of the curve.
(14): According to yet another aspect of the present invention, there is provided a program for controlling a mobile object capable of performing autonomous movement, the program causing a computer to: acquire a current position of the mobile object, a current state of the mobile object, and a target trajectory of the mobile object; set a plurality of first control points on a predicted trajectory based on the current position and the current state; set a plurality of second control points on a target trajectory of the mobile object; generate a curve on the basis of the plurality of first control points and the plurality of second control points; and perform evaluation of the curve.

According to the above-described aspects (1) to (14), it is possible to improve the tracking performance for the target trajectory while stabilizing the behavior of a mobile object.

### BRIEF DESCRIPTION OF THE DRAWINGS

FIG. 1 is a diagram showing an example of configurations of a mobile object 1 and a control device 100 according to an embodiment.
FIG. 2 is a perspective view of the mobile object 1 according to an embodiment when seen from above.
FIG. 3A shows an example of a scene in which tracking control is performed according to an embodiment.
FIG. 3B is a diagram for explaining a state in which control points are set on each of a predicted trajectory PT and a target trajectory TT according to an embodiment.
FIG. 3C is a diagram for explaining a state in which a first B-spline curve BS1 is generated according to an embodiment.
FIG. 3D is a diagram for explaining a first evaluation area EA1 of the first B-spline curve BS1 according to an embodiment.
FIG. 3E is a diagram for explaining a state in which a second B-spline curve BS2 is generated according to an embodiment.
FIG. 3F is a diagram for explaining a second evaluation area EA2 of the second B-spline curve BS2 according to an embodiment.
FIG. 3G is a diagram for explaining a third evaluation area EA3 of a third B-spline curve BS3 according to an embodiment.
FIG. 3H is a diagram for explaining an n-th evaluation area EAn of an n-th B-spline curve BSn according to the embodiment.
FIG. 4A is a diagram for explaining a state in which one B-spline curve (a selected spline curve SS) is selected from among a plurality of B-spline curves according to an embodiment.
FIG. 4B is a diagram for explaining a state in which an extracted spline path EP is extracted from a selected spline curve SS according to an embodiment.
FIG. 4C is a diagram for explaining a state in which an instruction curvature of the mobile object 1 is calculated on the basis of a predicted trajectory PT and an extracted spline path EP according to an embodiment.
FIG. 5 is a flowchart showing an example of a flow of a process for tracking control executed by the control device 100 according to an embodiment.

### DETAILED DESCRIPTION OF THE INVENTION

Hereinafter, embodiments of a mobile object control device, a mobile object control method, and a program according to the present invention will be described with reference to the drawings. The mobile object control device according to the embodiment performs tracking control to a target trajectory while taking into account a current state of a mobile object, thereby achieving both the stability of the behavior of the mobile object and the tracking performance for the target trajectory. The mobile object has, for example, an autonomous movement function for a vehicle (e.g., a four-wheeled vehicle or a three-wheeled vehicle), a micromobility device, a wheeled robot, an electric wheelchair, or the like. Hereinafter, a case where the mobile object is a micromobility device will be described as an example. This micromobility device moves on both a roadway and a predetermined area (e.g., a sidewalk) different from the roadway.

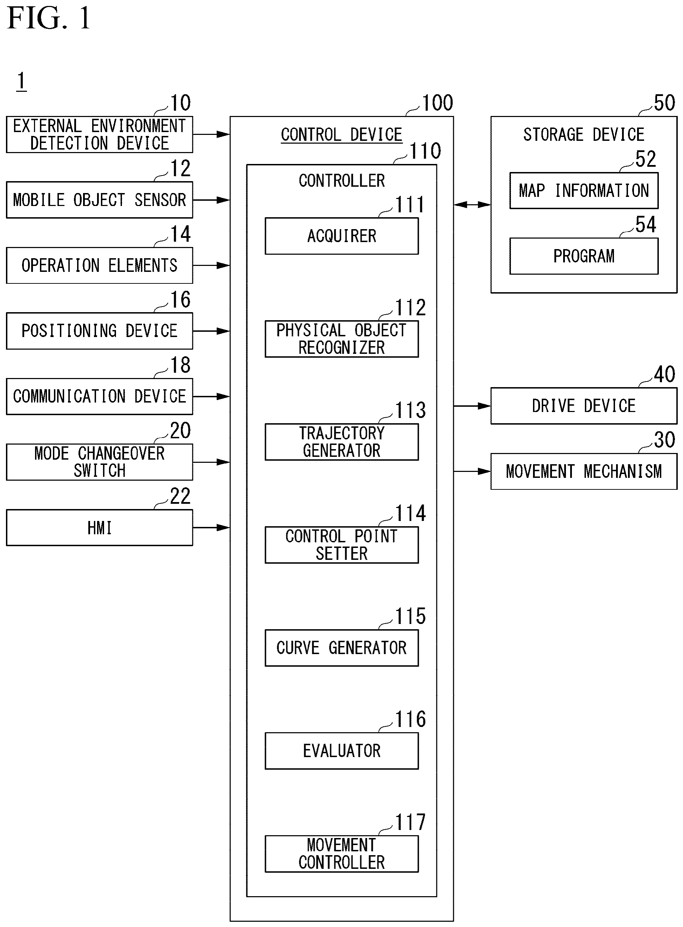

FIG. 1 is a diagram showing an example of configurations of a mobile object 1 and a control device 100 according to an embodiment. The mobile object 1 is equipped with, for example, an external environment detection device 10, a mobile object sensor 12, operation elements 14, a positioning device 16, a communication device 18, a mode changeover switch 20, a human machine interface (HMI) 22, a mobile mechanism 30, a drive device 40, a storage device 50, and a control device 100. It should be noted that some of these constituent elements that are not essential for implementing the functions of the present invention may be omitted.

The external environment detection device 10 detects an external situation of the mobile object 1. For example, the external environment detection device 10 includes various types of devices whose detection ranges are at least a part of surroundings (including a travel direction) of the mobile object 1. The external environment detection device 10 includes an external camera, a radar device, a light detection and ranging (LIDAR) device, a sensor fusion device, and the like. The external environment detection device 10 outputs information (an image, a position of a physical object, and the like) indicating detection results to the control device 100.

The mobile object sensor 12 includes, for example, a speed sensor, an acceleration sensor, a yaw rate (angular velocity) sensor, a direction sensor, an operation amount detection sensor attached to the operation element 14, and the like.

The operation element 14 receives a driving operation from an occupant of the mobile object. The operation elements 14 include, for example, an operation element for issuing an acceleration/deceleration instruction (e.g., an accelerator pedal, a brake pedal, a dial switch, or a lever for adjusting a speed) and an operation element for issuing a steering instruction (e.g., a steering wheel). In this case, the mobile object sensor 12 may include an accelerator position sensor, a brake depression amount sensor, a steering torque sensor, and the like. The mobile object 1 may have some operation elements other than the above-described operation elements as the operation elements 14 (e.g., a non-annular rotary operation element, a joystick, a button, and the like).

The positioning device 16 is a device that measures a position of the mobile object 1. The positioning device 16 is, for example, a Global Navigation Satellite System (GNSS) receiver, and identifies the position of the mobile object 1 on the basis of a signal received from a GNSS satellite, and outputs the identified position as position information. In addition, the position information of the mobile object 1 may be estimated from a position of a Wi-Fi base station to which the communication device 18 is connected.

The communication device 18 communicates with other mobile objects located around the mobile object, using, for example, a cellular network, a Wi-Fi network, Bluetooth (registered trademark), dedicated short-range communication (DSRC), or the like, or communicates with various types of external devices (e.g., management servers) via a radio base station.

The mode changeover switch 20 is a switch operated by the occupant. The mode changeover switch 20 may be a mechanical switch or a graphical user interface (GUI) switch set on a touch panel of the HMI 22. The mode changeover switch 20 receives an operation for changing the driving mode to, for example, any one of a mode A, a mode B, and a mode C. The mode A is an assist mode in which one of the steering operation and the acceleration/deceleration control is performed by the occupant, and the other is performed automatically. The mode A may include a mode A-1 in which the steering operation is performed by the occupant and the acceleration/deceleration control is performed automatically and a mode A-2 in which the acceleration/deceleration operation is performed by the occupant and the steering control is performed automatically. The mode B is a manual driving mode in which the steering operation and the acceleration/deceleration operation are performed by the occupant. The mode C is an automated driving mode in which the steering control and the acceleration/deceleration control are performed automatically.

The HMI 22 presents various types of information to the occupant of the mobile object 1 (or notifies the occupant of the mobile object 1 of various types of information) and receives input operations from the occupant. The HMI 22 includes various types of display devices, speakers, microphones, buzzers, touch panels, switches, keys, lamps, and the like. For example, the HMI 22 notifies the occupant of a travel state of the mobile object 1 controlled by the control device 100 in a notification manner differing according to a difference in travel state. Moreover, the HMI 22, for example, provides information from the control device 100 or provides information acquired from an external device by the communication device 18.

The mobile mechanism 30 is a mechanism for moving the mobile object 1 on a road. The mobile mechanism 30 is, for example, a group of wheels including steered wheels and driven wheels.

The drive device 40 moves the mobile object 1 by outputting a force to the mobile mechanism 30. For example, the drive device 40 includes a motor that drives the driven wheels, a battery that stores electric power to be supplied to the motor, a steering device that adjusts a steering angle of the steered wheel, and the like. The drive device 40 may include an internal combustion engine, a fuel cell, and the like as a drive force output means or an electric power generation means. Moreover, the drive device 40 may further include a brake device that utilizes a frictional force or air resistance.

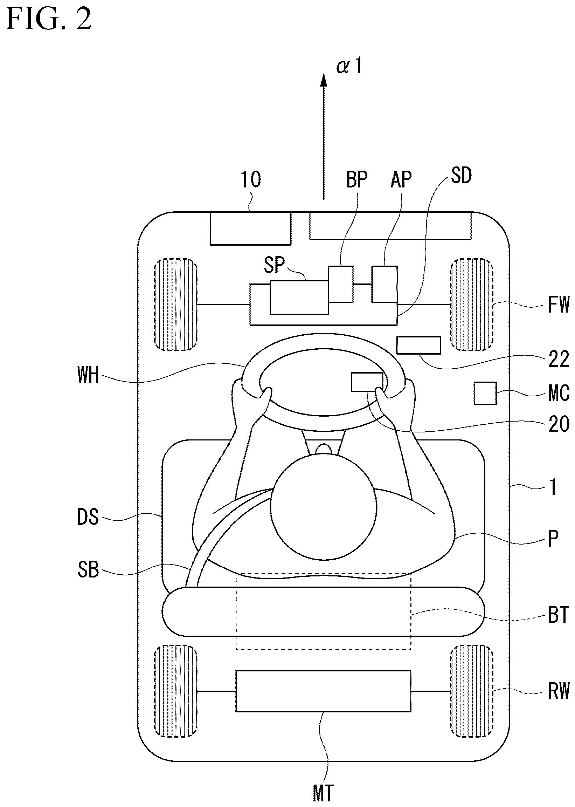

FIG. 2 is a perspective view of the mobile object 1 seen from above. In FIG. 2, FW denotes a steered wheel, RW denotes a driven wheel, SD denotes a steering device, MT denotes a motor, and BT denotes a battery. The steering device SD, the motor MT, and the battery BT are included in the drive device 40. Also, AP denotes an accelerator pedal, BP denotes a brake pedal, WH denotes a steering wheel, SP denotes a speaker, and MC denotes a microphone. The mobile object 1 shown in FIG. 2 is a one-seater mobile object and an occupant P sits in a driver's seat DS and fastens a seat belt SB. An arrow α1 is a travel direction (a speed vector) of the mobile object 1. The external environment detection device 10 is provided near a front end of the mobile object 1 and the mode changeover switch 20 is provided in a boss part of the steering wheel WH, in their respective forms. Moreover, the HMI 22 serving as a display device is provided in front of the occupant P inside the mobile object.

Returning to FIG. 1, the storage device 50 is a non-transitory storage device such as a hard disk drive (HDD), a flash memory, or a random-access memory (RAM). The storage device 50 stores map information 52, a program 54 executed by the control device 100, and the like. Although the storage device 50 is shown outside a frame of the control device 100 in FIG. 1, the storage device 50 may be included in the control device 100.

### [Control device]

The control device 100 includes, for example, a controller 110. The controller 110 includes, for example, an acquirer 111, a physical object recognizer 112, a trajectory generator 113, a control point setter 114, a curve generator 115, an evaluator 116, and a movement controller 117. Functional elements of the controller 110 are implemented, for example, by a hardware processor such as a central processing unit (CPU) executing the program (software) 54. Also, some or all of these constituent elements may be implemented by hardware (including a circuit or circuitry) such as a large-scale integration (LSI) circuit, an application-specific integrated circuit (ASIC), a field-programmable gate array (FPGA), or a graphics processing unit (GPU) or may be implemented by software and hardware in cooperation. The program may be pre-stored in the storage device 50 or may be stored in a removable storage medium (a non-transitory storage medium) such as a DVD or a CD-ROM and then installed in the storage device 50 when the storage medium is loaded in a drive device.

The acquirer 111 acquires various types of information from various types of external devices (e.g., the external environment detection device 10, the mobile object sensor 12, the operation elements 14, the positioning device 16, the communication device 18, the mode changeover switch 20, and the HMI 22). For example, the acquirer 111 acquires information about a current state of the mobile object 1 outputted from the mobile object sensor 12, and information about a current position of the mobile object 1 outputted from the positioning device 16. Moreover, the acquirer 111 acquires information about a target trajectory from the storage device 50.

The object recognizer 112 recognizes one or more physical objects located around the mobile object 1 (e.g., within a predetermined distance from the mobile object 1) on the basis of an output of the external environment detection device 10. The physical objects include some or all of the followings: a mobile object such as a vehicle, a bicycle, or a pedestrian; a travel path boundary such as a road section line, a step, a guardrail, a road shoulder, or a median strip; a structure located on a road such as a road sign or a signboard; and an obstacle such as a fallen (or falling) object located on a road. The physical object recognizer 112 acquires information of the presence, position, type, and the like of the other mobile object by inputting an image captured by an external camera to a trained model that has been trained to output information of the presence, position, and type of a physical object if an image captured by the external camera of the external environment detection device 10 is inputted to the model.

The trajectory generator 113 generates a target trajectory along which the mobile object 1 automatically travels in the future (independently of the driver's operation) so that movement toward the physical object recognized by the physical object recognizer 112 is avoided. For example, the physical object recognizer 112 sets a risk area centered on a physical object of which a state has been outputted, and within the risk area, the physical object recognizer 112 sets the risk as an index value indicating a degree to which the mobile object 1 should not move toward the physical object. The trajectory generator 113 generates a target trajectory so that the mobile object 1 does not pass through a point where the risk is greater than or equal to a predetermined value and travels within a recognized travel lane. For example, the target trajectory is represented as sequentially aligned points (trajectory points) at which the mobile object 1 is required to arrive. The trajectory points are points at which the mobile object 1 is required to arrive for each predetermined travel distance (e.g., about several meters [m]) in a distance along a road. In addition, a target speed and a target acceleration for each predetermined sampling time (e.g., about 0.x [sec] where x is a decimal number) are generated as a part of the target trajectory. Moreover, the trajectory point may be a position where the mobile object 1 is required to arrive at a sampling instant of time for each predetermined sampling time. In this case, information of the target speed and the target acceleration is represented with an interval between the trajectory points.

The control point setter 114 sets a plurality of first control points (hereinafter referred to as "first-half control points") on a predicted trajectory based on the current position and state of the mobile object 1 and sets a plurality of second control points (hereinafter referred to as "second-half control points") on a target trajectory of the mobile object. The control point setter 114 sets a plurality of sets each having a plurality of second-half control points on the target trajectory. The predicted trajectory has a predetermined length. Details of a process of the control point setter 114 will be described later.

The curve generator 115 generates a curve on the basis of the plurality of first-half control points and the plurality of second-half control points set by the control point setter 114. The curve to be generated is, for example, a spline curve (a B-spline curve). The curve generator 115 generates a plurality of curves on the basis of: each of the sets of the plurality of second-half control points; and the plurality of first-half control points. Details of the process of the curve generator 115 will be described later.

The evaluator 116 evaluates a curve generated by the curve generator 115. The evaluator 116 selects a curve with the highest evaluation from among a plurality of curves generated by the curve generator 115. The evaluator 116 performs the evaluation on the basis of at least one of an area of a portion surrounded by the target trajectory and the curve, a ratio between this area and a length of the curve, a maximum curvature of the curve, and a maximum curvature change rate of the curve. The evaluator 116 calculates an instruction value (hereinafter referred to as an "instruction curvature") related to the curvature of the movement of the mobile object 1 by performing curvature fitting on the selected curve. The instruction curvature is, for example, a control value for the steering device SD associated with a steering angle of the steered wheel. The evaluator 116 performs curvature fitting on a part of the selected curve that has a length when a predetermined length from the current position of the mobile object 1 is used as a reference. Details of the process of the evaluator 116 will be described later.

The movement controller 117 controls the movement of the mobile object 1. In the mode A-1, the movement controller 117 refers to information about a travel path and physical objects based on the output of the object recognizer 112 and controls the motor MT of the drive device 40 so that a distance to a physical object located in front of the mobile object 1 is maintained at a certain distance or more and the mobile object 1 moves at a predetermined speed when the distance to the physical object located in front of the mobile object 1 is sufficiently long. Moreover, the movement controller 117 controls the steering device SD so that the steering angle of the steered wheel is changed on the basis of an amount of operation of the operation element 14 such as the steering wheel.

In the mode A-2, the movement controller 117 controls the steering device SD of the drive device 40 so that the mobile object 1 moves along the target trajectory generated by the trajectory generator 113. The movement controller 117 moves the mobile object 1 according to the instruction curvature calculated by the evaluator 116. In respect of acceleration and deceleration, the movement controller 117 controls the motor MT of the drive device 40 on the basis of the speed of the mobile object 1 and the amount of operation of the accelerator pedal or the brake pedal.

In the mode B, the movement controller 117 controls the motor MT of the drive device 40 on the basis of the speed of the mobile object 1 and the amount of operation of the accelerator pedal or the brake pedal. Moreover, the movement controller 117 controls the steering device SD so that the steering angle of the steered wheel is changed on the basis of the amount of operation of the operation element 14 such as the steering wheel.

In the mode C, the movement controller 117 controls the steering device SD and the motor MT of the drive device 40 so that the mobile object 1 moves along a target trajectory generated by the trajectory generator 113. The movement controller 117 moves the mobile object 1 according to the instruction curvature calculated by the evaluator 116.

### [Tracking control]

Hereinafter, tracking control of the mobile object 1 for the target trajectory when the mobile object 1 is moving under the control of automated driving (e.g., the mode A-2 and the mode C) will be specifically described. In the tracking control, a spline curve based on the current state (the instruction curvature and steering angle) of the mobile object 1 and the target trajectory is used to derive the instruction curvature (the steering angle) such that both the stability of the behavior of the mobile object 1 and the tracking performance for the target trajectory are achieved satisfactorily. Because it is known that the spline curve has a curvature continuous, it is possible to set an asymptotic trajectory for enabling smooth traveling and tracking the target trajectory with a high degree of accuracy by appropriately setting an evaluation function used for selecting the spline curve.

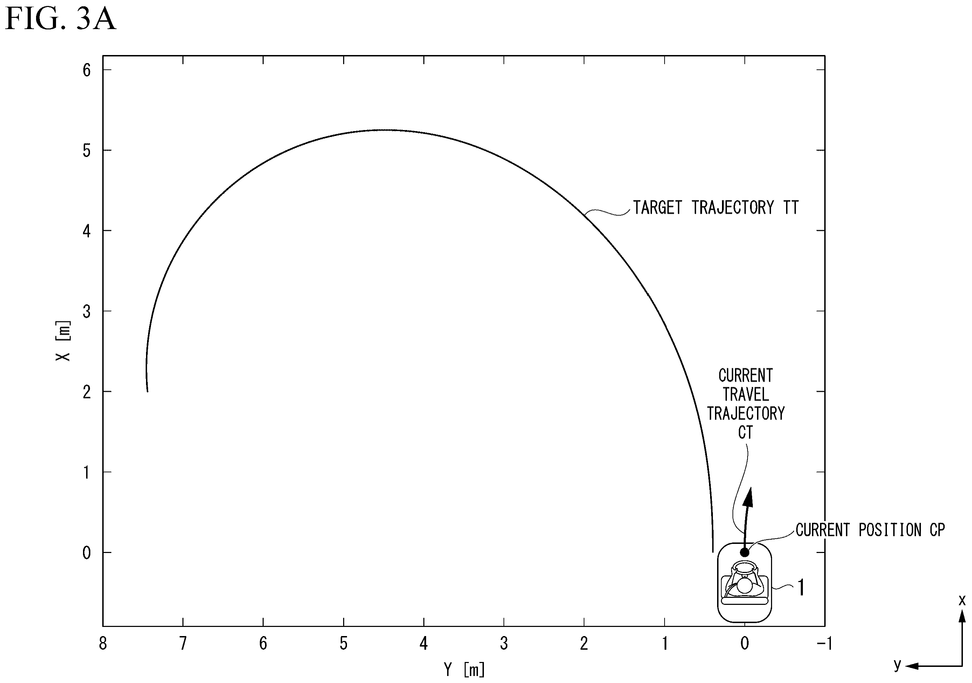

FIG. 3A shows an example of a scene where tracking control of the mobile object 1 is performed. In FIG. 3A, there is shown an example in which the mobile object 1 is traveling toward a current travel trajectory CT at a current position CP and a target trajectory TT (also referred to as a "reference path") that has been set as a trajectory along which the mobile object 1 intends to move from now is provided. The current travel trajectory CT, for example, is calculated on the basis of the steering angle of the steered wheel of the mobile object 1. It is assumed that an X-axis direction is a forward direction (a travel direction) of the mobile object 1 and a Y-axis direction is a direction perpendicular to the X-axis direction (a left-hand direction relative to the travel direction of the mobile object 1). As shown in FIG. 3A, when seen from the current position CP, the target trajectory TT extends in a direction shifted from the X-axis direction in a Y direction in the XY plane, whereas the current travel trajectory CT extends in a direction shifted from the X direction in a -Y direction. In such a scene, if the travel trajectory (the current travel trajectory CT) of the mobile object 1 is to be suddenly adjusted to the target trajectory TT, a sudden change in steering will occur accordingly. In order to avoid this sudden change, the steering is controlled on the basis of the following steps in the present embodiment.

### (Control point setting)

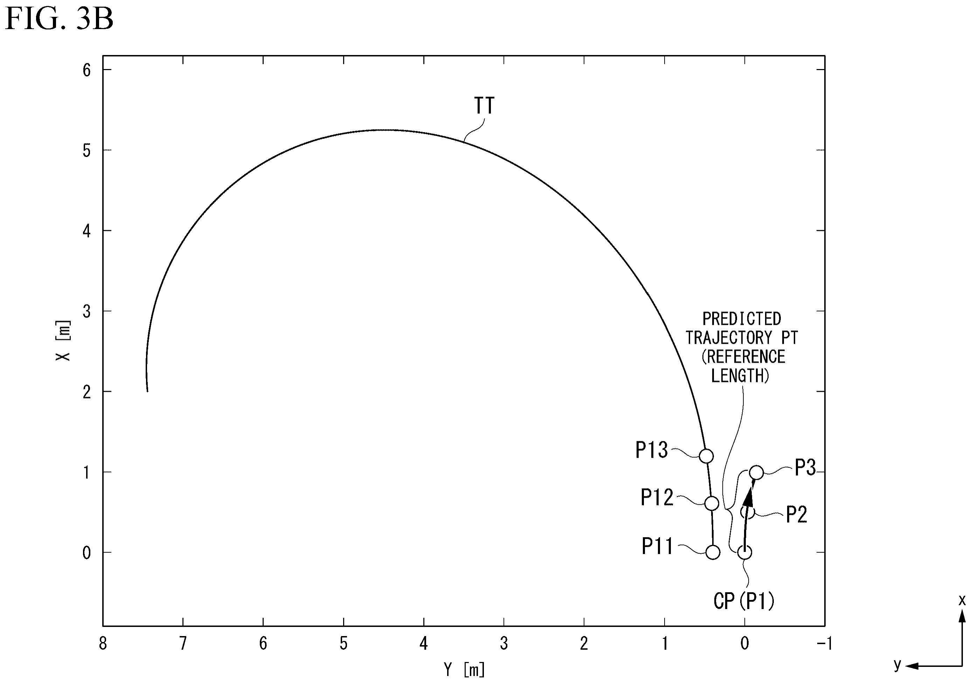

FIG. 3B is an explanatory diagram of a state in which control points are set on a predicted trajectory PT (also referred to as a "predicted path") and on the target trajectory TT, respectively. First, a predicted trajectory PT having a predetermined reference length is set with the current position CP being used as the starting point. Three equally spaced first-half control points (P1, P2, and P3) are set on this predicted trajectory PT. The first first-half control point P1 coincides with the current position CP (the starting point of the predicted trajectory PT), the third first-half control point P3 coincides with an end point of the predicted trajectory PT, and the second first-half control point P2 is a midpoint between the first first-half control point P1 and the third first-half control point P3. Subsequently, a first second-half control point P11, a second second-half control point P12, and a third second-half control point P13 are set on the target trajectory TT. An interval between the first second-half control point P11 and the second second-half control point P12 (an interval between the second second-half control point P12 and the third second-half control point P13) may be the same as an interval between the first first-half control point P1 and the second first-half control point P2 (an interval between the second first-half control point P2 and the third first-half control point P3). The reference length can be arbitrarily set on the basis of the speed of the mobile object 1, the length of the time interval for performing tracking control, and the like. The reference length is variable according to a current speed of the mobile object 1. The reference length is set to be longer as the speed of the mobile object 1 increases.

### (Spline curve generation and evaluation)

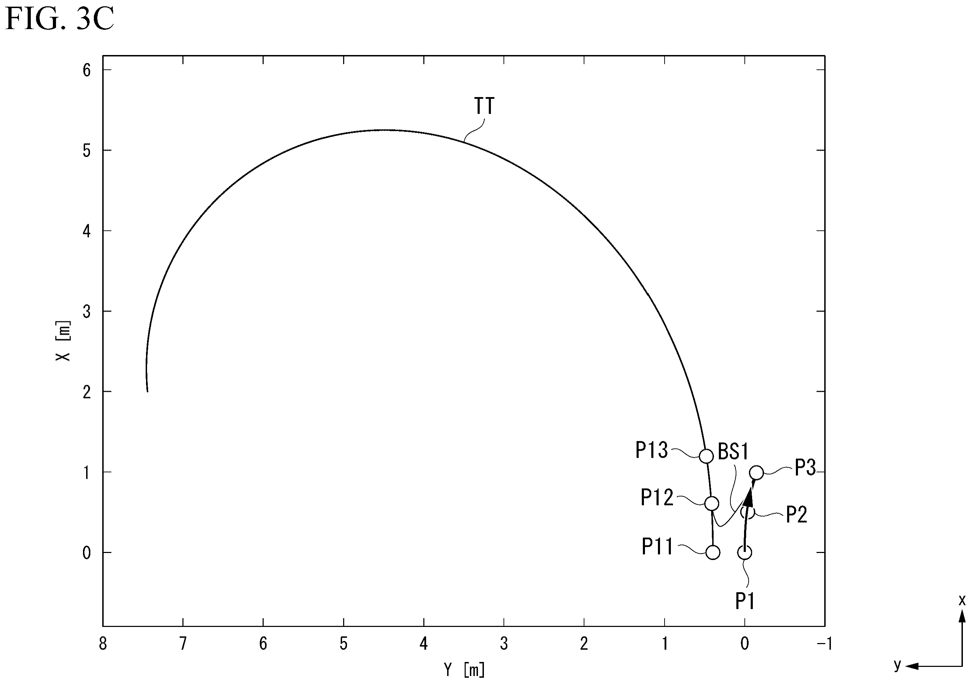

FIG. 3C is an explanatory diagram of a state in which a B-spline curve is set on the basis of control points set on the predicted trajectory PT and the target trajectory TT. A first B-spline curve BS1 is generated on the basis of the three first-half control points (P1, P2, and P3) set on the predicted trajectory PT and the three second-half control points (P11, P12, and P13) set on the target trajectory TT.

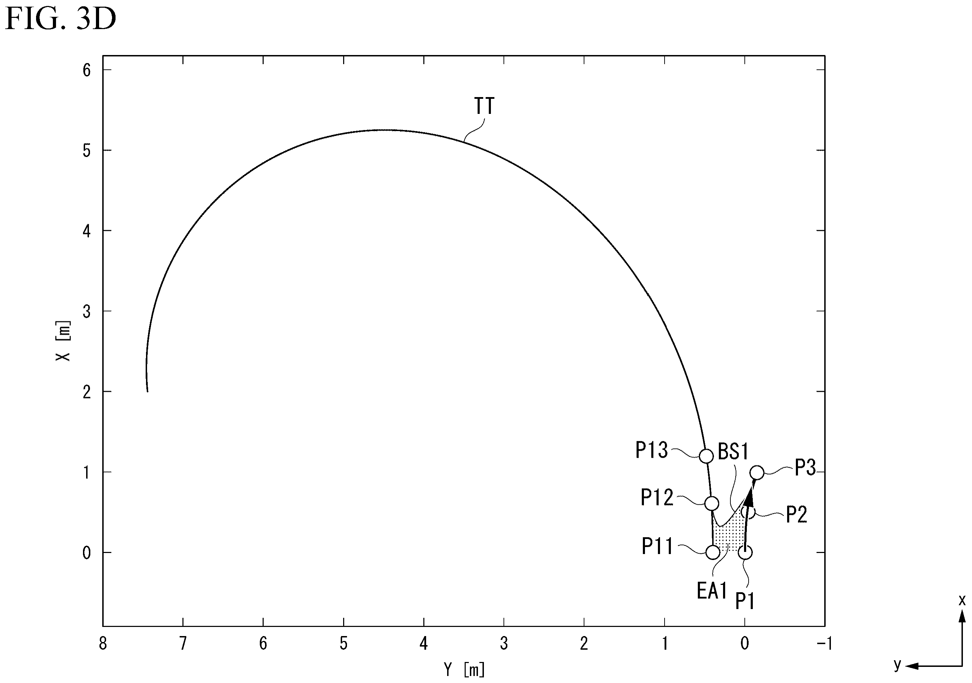

FIG. 3D is an explanatory diagram of a first evaluation area EA1 of the first B-spline curve BS1. In the example of FIG. 3D, the first B-spline curve BS1 is evaluated on the basis of a size of the first evaluation area EA1 that is a portion surrounded by the predicted trajectory PT, the target trajectory TT, the first B-spline curve BS1, and a line segment connecting the first first-half control point P1 and the first second-half control point P11.

### (Control point setting, spline curve generation, and evaluation iteration)

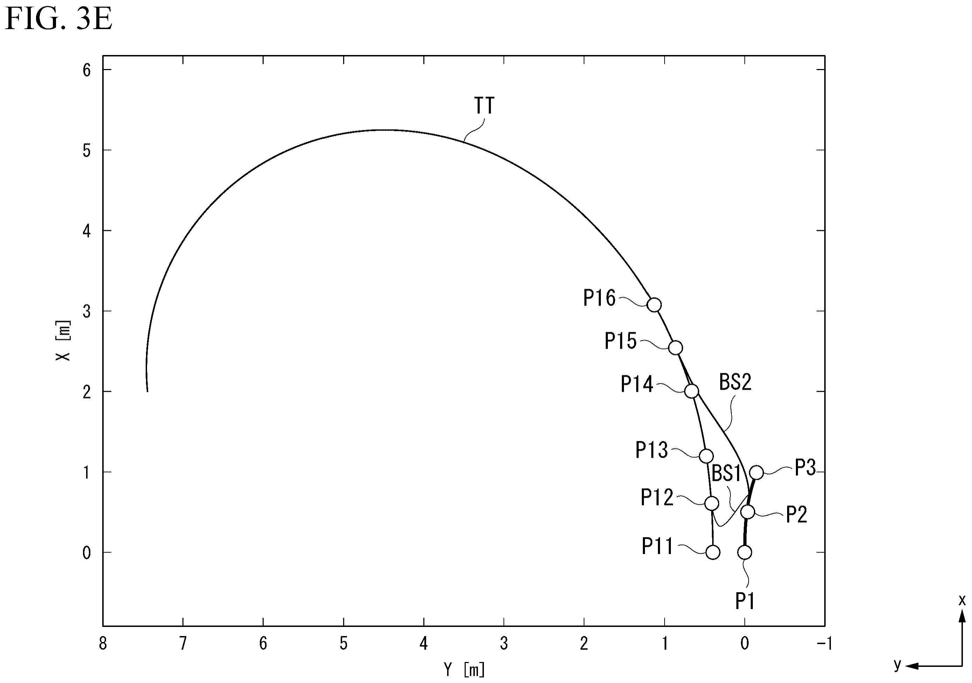

FIG. 3E is an explanatory diagram of a state in which other control points are further set on the target trajectory TT. After the first B-spline curve BS1 is evaluated as described above, other three second-half control points (P14, P15, and P16) are set on the target trajectory TT. Intervals between the newly set second-half control points (P14, P15, and P16) are the same as intervals between the initially set second-half control points (P11, P12, and P13). A second B-spline curve BS2 is generated on the basis of the three first-half control points (P1, P2, and P3) set on the predicted trajectory PT and the three second-half control points (P14, P15, and P16) set on the target trajectory TT.

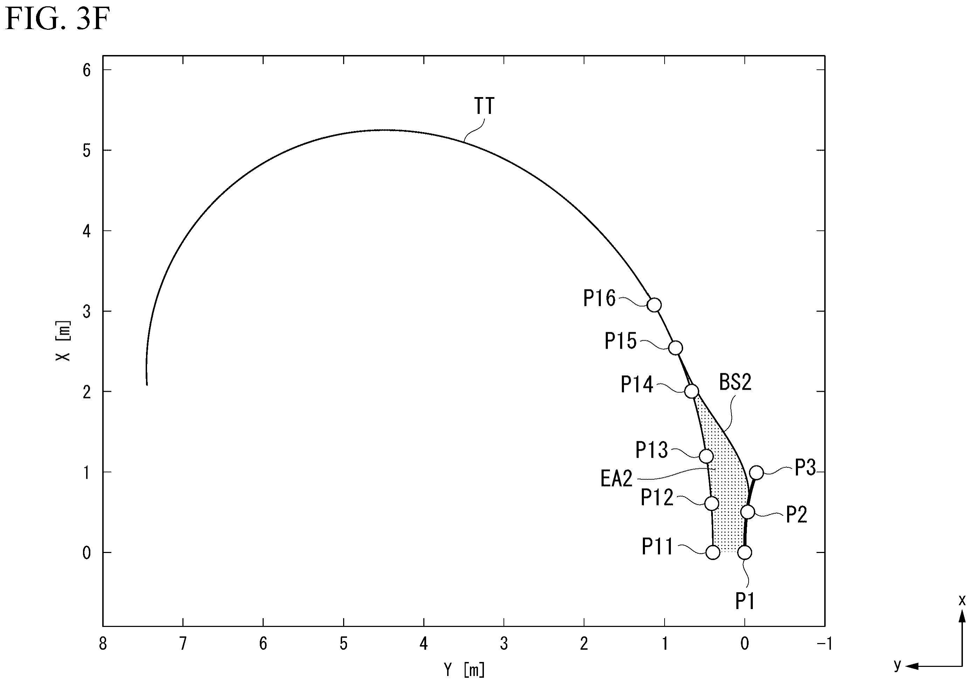

FIG. 3F is an explanatory diagram of a second evaluation area EA2 of the second B-spline curve BS2. In the example of FIG. 3F, the second B-spline curve BS2 is evaluated on the basis of a size of the second evaluation area EA2 that is a portion surrounded by the predicted trajectory PT, the target trajectory TT, the first B-spline curve BS1, and a line segment connecting the first first-half control point P1 and the first second-half control point P11.

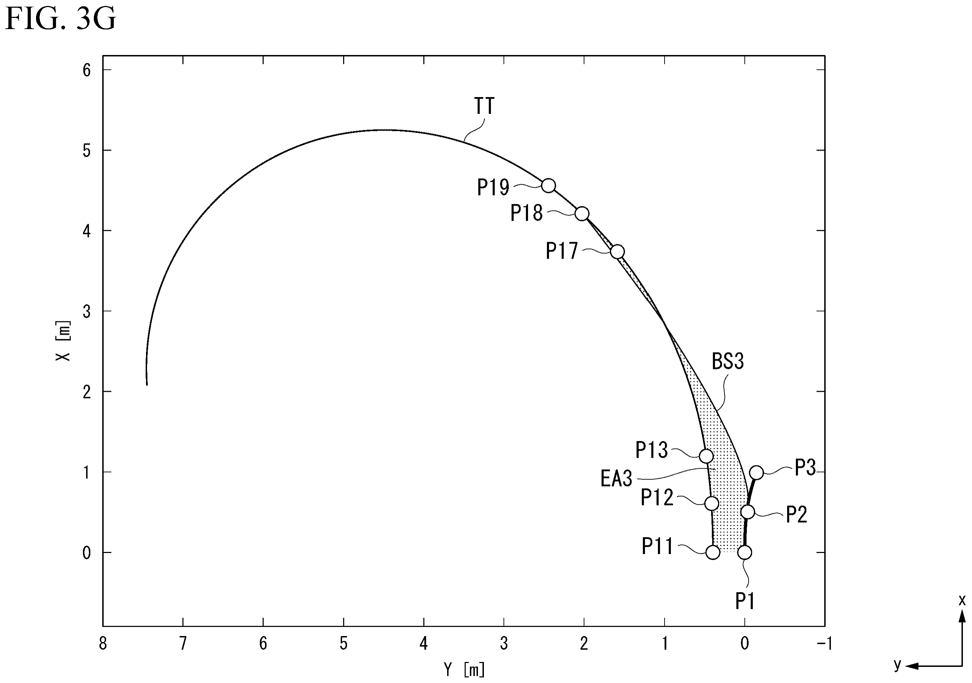

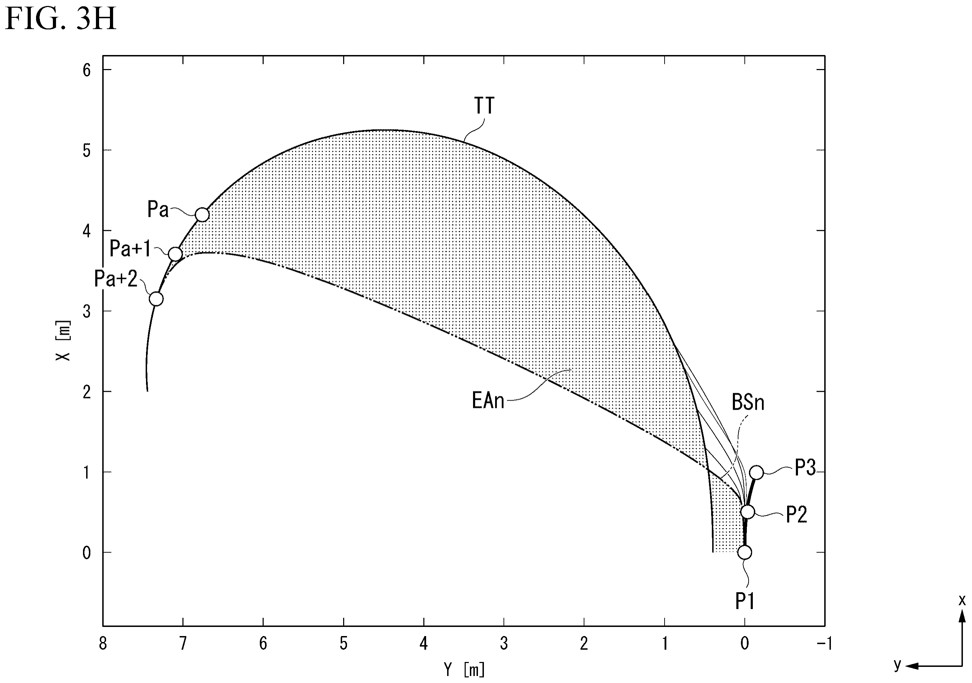

Thereafter, the further setting of other control points on the target trajectory TT, and the generation and evaluation of the B-spline curve are iteratively executed. In FIG. 3G, a third B-spline curve BS3 is generated on the basis of other second-half control points (P17, P18, and P19) set on the target trajectory TT, and accordingly a third evaluation area EA3 is evaluated. In FIG. 3H, an n-th B-spline curve BSn is generated on the basis of other second-half control points (Pa, Pa+1, and Pa+2) set on the target trajectory TT, and accordingly an n-th evaluation area EAn is evaluated.

As shown in FIGS. 3A to 3H described above, two or more sets of second-half control points are set across the entire target trajectory TT and a B-spline curve is generated and evaluated on the basis of each of these sets of second-half control points and the first-half control points. For example, after setting candidate points for a plurality of second-half control points at equal intervals in advance on the target trajectory TT, a process for shifting a position of a first control point of each set of second-half control points by a predetermined number (e.g., one by one) along the candidate points is iterated, thereby making a plurality of sets of second-half control points set across the entire target trajectory TT.

### (Determination of instruction curvature)

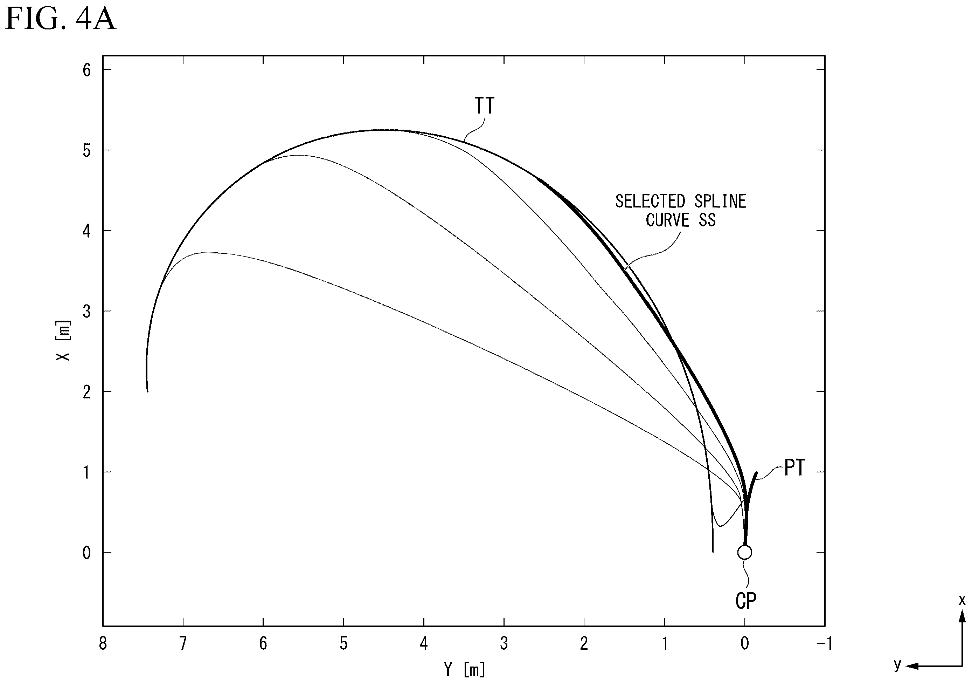

Next, an asymptotic trajectory for enabling smooth traveling and tracking the target trajectory with high accuracy is set on the basis of an evaluation result for each of the plurality of B-spline curves as described above. FIG. 4A is an explanatory diagram of a state in which one B-spline curve (selected spline curve SS) is selected from among a number of B-spline curves. The selection of the B-spline curve is performed using an evaluation function. The evaluation function is designed, for example, on the basis of an evaluation area calculated for each B-spline curve as described above. For example, the evaluation function is designed such that the evaluation value of the evaluation function is higher as the evaluation area is smaller. Besides, the evaluation function may be based on at least one of a ratio between the evaluation area and the length of the B-spline curve, a maximum curvature of the B-spline curve, and a maximum curvature change rate of the B-spline curve.

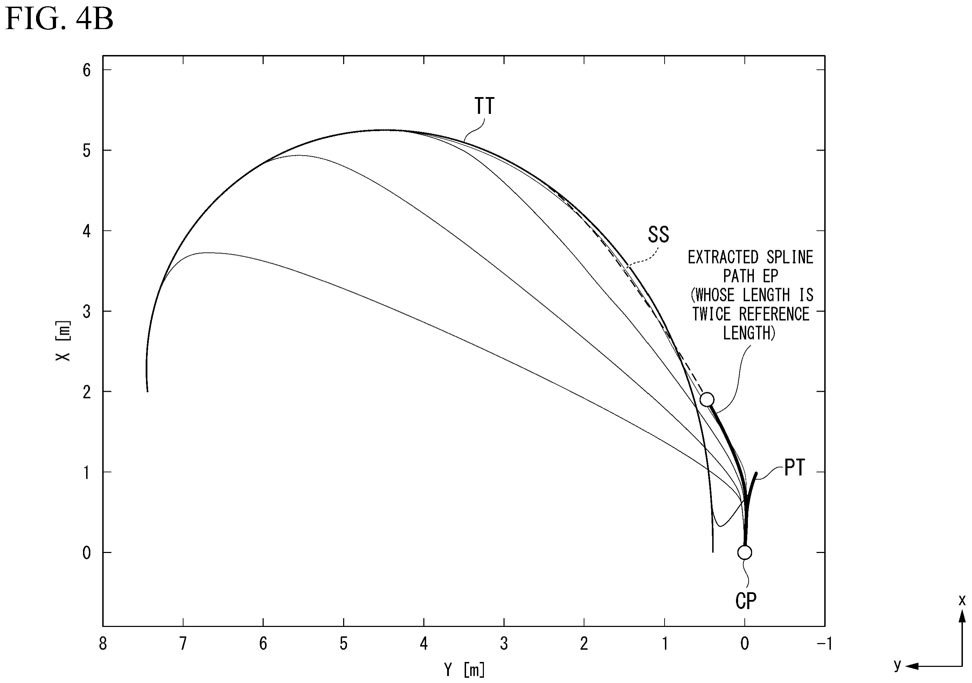

FIG. 4B is an explanatory diagram of a state in which an extracted spline path EP of a predetermined length from the starting point (e.g., the current position CP) of the selected spline curve SS is extracted in the selected spline curve SS. The length of the extracted spline path EP is, for example, twice a length (a reference length) of the predicted trajectory PT.

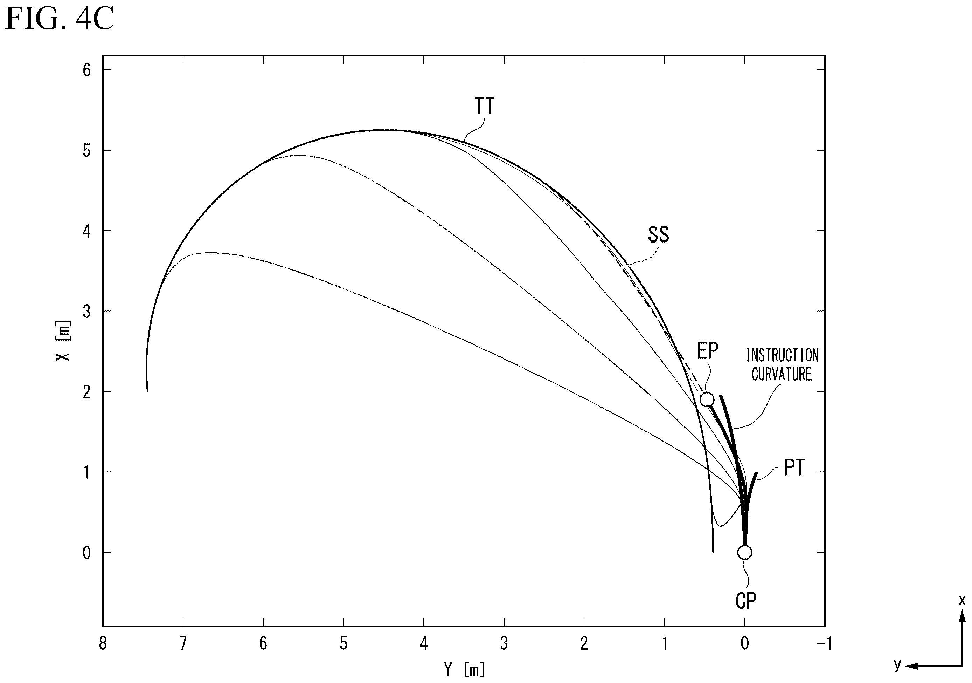

FIG. 4C is an explanatory diagram of a state in which the instruction curvature of the mobile object 1 is calculated on the basis of the predicted trajectory PT and the extracted spline path EP. For example, the instruction curvature is decided by performing curvature (curve) fitting (curvature fitting on the selected spline curve SS) on the basis of the extracted spline path EP. On the basis of this instruction curvature, a control value (a steering angle of the steering wheel) for the steering device SD associated with the steering angle of the steered wheel is calculated. By controlling the steering angle on the basis of the control value calculated in this way, the mobile object 1 travels along a trajectory such that it passes between the predicted trajectory PT and the extracted spline path EP.

### [Processing flow]

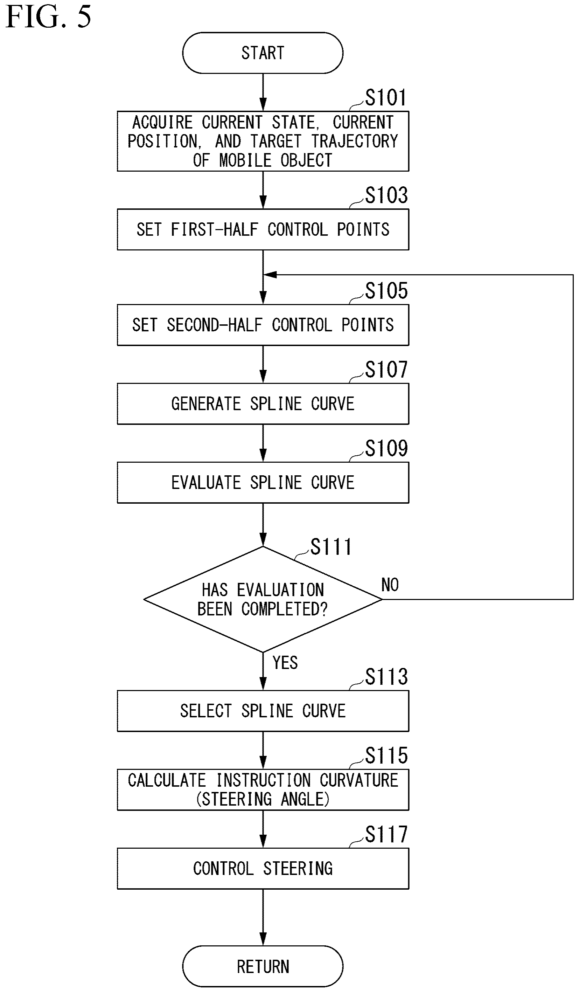

Next, a processing flow of the tracking control executed by the control device 100 will be described. FIG. 5 is a flowchart showing an example of the processing flow of the tracking control executed by the control device 100. A series of processing steps shown in FIG. 5 is iteratively executed at a predetermined cycle while the mobile object 1 is traveling under the control of automated driving. Moreover, it is also assumed that the target trajectory generated by the trajectory generator 113 is stored in the storage device 50.

First, the acquirer 111 acquires a current state of the mobile object 1 outputted from the mobile object sensor 12, a current position of the mobile object 1 outputted from the positioning device 16, and a target trajectory stored in the storage device 50 (step S101). The current state of the mobile object 1 includes at least the current instruction curvature (steering angle) of the mobile object 1.

Then, the control point setter 114 sets a plurality of first-half control points on the predicted trajectory of the mobile object 1 (step S103). Furthermore, the control point setter 114 sets a plurality of second-half control points on the target trajectory (step S105).

Next, the curve generator 115 generates a spline curve (a B-spline curve) on the basis of the plurality of first-half control points and the plurality of second-half control points set by the control point setter 114 (step S107).

Subsequently, the evaluator 116 evaluates the spline curve generated by the curve generator 115 (step S109). The evaluator 116 performs the evaluation on the basis of at least one of an area of a portion surrounded by the target trajectory and the spline curve, a ratio between this area and a length of the curve, a maximum curvature of the curve, and a maximum curvature change rate of the curve.

The evaluator 116 then determines whether or not the evaluation of all the plurality of second-half control points set on the target trajectory has been completed (step S111). When it is determined that the evaluation has not been completed (step S111; NO), the process returns to step S105, and the control point setter 114 further sets a plurality of other second-half control points on the target trajectory and iterates the subsequent steps.

When it is determined that the evaluation has been completed (step S111; YES), the evaluator 116 selects a spline curve with the highest evaluation from among a plurality of spline curves generated by the curve generator 115 (step S113).

The evaluator 116 next performs curvature fitting on the selected spline curve to calculate the instruction curvature (steering angle) of the mobile object 1 (step S115). Then, the movement controller 117 performs steering control of the mobile object 1 in accordance with the instruction curvature calculated by the evaluator 116 (step S117).

According to the above-described embodiment, it is possible to improve the tracking performance to the decided trajectory while stabilizing the behavior of the mobile object. By performing tracking control for the target trajectory while taking into account the current state (instruction curvature) of the mobile object, it is possible to satisfactorily achieve both the stability of the behavior of the mobile object and the tracking performance for the target trajectory. In particular, it is possible to suppress a sudden change in steering in a case where the target trajectory is significantly changed according to a change in the destination or surrounding environment, or the like.

It is noted that, because a travel path along which the mobile object travels has a lane generally defined by a straight part and a curved part (curve), it may be determined whether the mobile object 1 is in a straight part or a curved part in setting the instruction curvature of the mobile object 1. According to this determination, it is possible to allow the length of the target trajectory used to calculate the instruction curvature to be set longer according to the situation, thereby making it possible to improve stability of the behavior of the steering wheel and the tracking performance to the target trajectory.

The embodiment described above can be represented as follows.

A mobile object control device for a mobile object capable of performing autonomous movement, the mobile object control device including:
a storage medium storing computer-readable instructions; and
a processor connected to the storage medium, the processor executing the computer-readable instructions to:
acquire a current position of the mobile object, a current state of the mobile object, and a target trajectory of the mobile object;
set a plurality of first control points on a predicted trajectory based on the current position and the current state;
set a plurality of second control points on a target trajectory of the mobile object;
generate a curve on the basis of the plurality of first control points and the plurality of second control points; and
perform evaluation of the curve.

Although modes for carrying out the present invention have been described using embodiments, the present invention is not limited to the embodiments and various modifications and substitutions can also be made without departing from the scope and spirit of the present invention.

## Claims

1. A mobile object control device for a mobile object capable of performing autonomous movement, the mobile object control device comprising:
an acquirer configured to acquire a current position of the mobile object, a current state of the mobile object, and a target trajectory of the mobile object;
a control point setter configured to set a plurality of first control points on a predicted trajectory based on the current position and the current state and set a plurality of second control points on a target trajectory of the mobile object;
a curve generator configured to generate a curve on the basis of the plurality of first control points and the plurality of second control points; and
an evaluator configured to perform evaluation of the curve.

2. The mobile object control device according to claim 1, wherein
the control point setter is configured to set a plurality of sets each having the plurality of second control points on the target trajectory,
the curve generator is configured to generate a plurality of curves on the basis of the plurality of first control points and each of the plurality of sets, and
the evaluator is configured to select a curve with highest evaluation from among the plurality of curves on the basis of evaluation results for the plurality of curves.

3. The mobile object control device according to claim 1 or 2, wherein the evaluator is configured to perform the evaluation on the basis of at least one of an area of a portion surrounded by the target trajectory and the curve, a ratio between the area and a length of the curve, a maximum curvature of the curve, or a maximum change rate of the curve.

4. The mobile object control device according to claim 2 or according to claim 2 and 3, wherein the evaluator is configured to calculate an instruction value for a curvature of movement of the mobile object by performing curvature fitting on the selected curve.

5. The mobile object control device according to claim 4, further comprising a movement controller configured to move the mobile object according to the calculated instruction value.

6. The mobile object control device according to claim 4 or 5,
wherein the predicted trajectory has a predetermined length, and
wherein the evaluator performs the curvature fitting on a part of the selected curve, the part having a length with the predetermined length from the current position being used as a reference.

7. The mobile object control device according to claim 6, wherein the predetermined length is variable according to a current speed of the mobile object.

8. The mobile object control device according to any one of claims 1-7, wherein the curve is a B-spline curve.

9. The mobile object control device according to any one of claims 1-8, wherein the current state of the mobile object includes at least an instruction value for a curvature of current movement of the mobile object.

10. The mobile object control device according to claim 9, wherein the instruction value is a current steering angle of the mobile object.

11. The mobile object control device according to any one of claims 1-10,
wherein the number of the first control points is 3, and
wherein the number of the second control points is 3.

12. The mobile object control device according to any one of claims 1-11, wherein an interval between the first control points in the plurality of first control points is equal to an interval between the second control points in the plurality of second control points.

13. A mobile object control method for a mobile object capable of performing autonomous movement, the mobile object control method comprising:
acquiring, by a computer, a current position of the mobile object, a current state of the mobile object, and a target trajectory of the mobile object;
setting, by the computer, a plurality of first control points on a predicted trajectory based on the current position and the current state;
setting, by the computer, a plurality of second control points on a target trajectory of the mobile object;
generating, by the computer, a curve on the basis of the plurality of first control points and the plurality of second control points; and
performing, by the computer, evaluation of the curve.

14. A program for controlling a mobile object capable of performing autonomous movement, the program causing a computer to:
acquire a current position of the mobile object, a current state of the mobile object, and a target trajectory of the mobile object;
set a plurality of first control points on a predicted trajectory based on the current position and the current state;
set a plurality of second control points on a target trajectory of the mobile object;
generate a curve on the basis of the plurality of first control points and the plurality of second control points; and
perform evaluation of the curve.
